# EUROPEAN PATENT APPLICATION

(11) **EP 4 852 581 A1**
(43) Date of publication of application: **09.12.2026**
(21) Application number: 25760723.4
(22) Date of filing: 05.02.2025
(51) Int. Cl.: H04W 72/21

(54) **COMMUNICATION METHOD AND APPARATUS, DEVICE, AND STORAGE MEDIUM**

(30) Priority: 26.02.2024 CN 202410211128
(71) Applicant: HUAWEI TECHNOLOGIES CO., LTD., Shenzhen, Guangdong 518129 (CN)
(72) Inventor: CHEN, Jiaxuan, Shenzhen, Guangdong 518129 (CN); SUN, Yan, Shenzhen, Guangdong 518129 (CN); GAO, Junhui, Shenzhen, Guangdong 518129 (CN); WANG, Xiaohan, Shenzhen, Guangdong 518129 (CN)
(74) Representative: Huawei European IPR
(86) International application number: PCT/CN2025/075818
(87) International publication number: WO 2025/180179

(57) **Abstract**

This application discloses a communication method, apparatus, and device, and a storage medium, and relates to the field of communication technologies, to resolve a problem in related technologies that UE cannot accurately determine a calculation duration. The method includes: obtaining at least one of first information and second information, where the first information indicates a processing capability of a terminal device and the second information indicates model complexity of a first model, and determining a calculation duration based on target information and at least one of the first information and the second information. The calculation duration is a duration for determining the target information. The first model is used to determine the target information.

## Description

This application claims priority to Chinese Patent Application No. 202410211128.6, filed with China National Intellectual Property Administration on February 26, 2024 and entitled "COMMUNICATION METHOD, APPARATUS, AND DEVICE, AND STORAGE MEDIUM", which is incorporated herein by reference in its entirety.

### TECHNICAL FIELD

This application relates to the field of communication technologies, and in particular, to a communication method, apparatus, and device, and a storage medium.

### BACKGROUND

With the continuous development of artificial intelligence, neural networks have been increasingly applied in the field of communication technologies. For example, a neural network may be used to determine feedback information. In an example, the feedback information is compressed downlink channel information. After obtaining downlink channel information based on a reference signal, user equipment (user equipment, UE) may input the downlink channel information into a neural network on the UE side to obtain compressed downlink channel information. Then, the UE may send the compressed downlink channel information to a base station, and the base station inputs the compressed downlink channel information into a neural network on the base station side to recover the downlink channel information.

It can be learned from the foregoing that a calculation duration for the UE to report feedback information may include a calculation duration of the neural network. If the UE cannot complete the calculation by reporting time required by the base station, the UE fails to send the feedback information to the base station on schedule. Therefore, the UE needs to evaluate a calculation duration required for obtaining the feedback information, so that the UE can determine, based on the calculation duration, whether the feedback information can be obtained before the reporting time required by the base station, and thus can determine whether the feedback information can be sent to the base station on schedule.

Therefore, how to accurately determine the calculation duration for the feedback information is an urgent problem to be resolved.

### SUMMARY

Embodiments of this application provide a communication method, apparatus, and device, and a storage medium, to resolve a problem in related technologies that a calculation duration cannot be accurately determined.

To achieve the foregoing objective, embodiments of this application provide the following technical solutions.

According to a first aspect, a communication method is provided. The method may be applied to any communication device such as a terminal device, or a network device. Specifically, the method is performed by a communication device, or by a module in the communication device, for example, a chip, a chip system, or a circuit. Alternatively, the method may be implemented by a logical module or software that can implement all or a part of functions of the communication device. This is not limited. For ease of description, the following uses an example in which the method is performed by the communication device for description.

The method includes: obtaining at least one of first information and second information, where the first information indicates a processing capability of a terminal device, and the second information indicates model complexity of a first model; and determining a calculation duration based on target information and at least one of the first information and the second information.

The calculation duration is an estimated duration for determining the target information.

The first model is used to determine the target information. It may be understood that the first model may indicate one model or a plurality of models. Specifically, when one model is required for determining the target information, the first model may indicate the model; or when a plurality of models are required for determining the target information, the first model may indicate the plurality of models.

To be specific, when one model is required for determining the target information, the first model includes one model; or when a plurality of models are required for determining the target information, the first model includes more than one model.

The first information may directly indicate the processing capability of the terminal device. For example, the first information includes the processing capability of the terminal device. Alternatively, the first information may indirectly indicate the processing capability of the terminal device. For example, the first information includes a processing capability level of the terminal device. This is not limited in this embodiment of this application.

The second information indicates the model complexity of the first model. The first model is used to determine the target information. Specifically, the second information may directly indicate the model complexity of the first model. For example, the second information includes the model complexity of the first model. Alternatively, the second information may indirectly indicate the model complexity of the first model. For example, the second information includes a model complexity level of the first model. This is not limited in this embodiment of this application.

It can be learned from the foregoing method that, the calculation duration is not determined based on information from a single dimension, but is determined based on information from a plurality of dimensions, for example, the processing capability of the communication device, the model complexity of the first model, and the target information. Therefore, accuracy of the determined calculation duration can be effectively improved.

In an optional implementation, the calculation duration is determined based on at least a first duration and a second duration.

The first duration is determined based on a type of the target information.

The second duration is determined based on the first information indicating the processing capability of the terminal device and/or the second information indicating the model complexity of the first model. It may be understood that when the first model includes a plurality of models, that is, the plurality of models are required for determining the target information, the second duration may be determined based on the first information indicating the processing capability of the terminal device and/or the second information indicating model complexity of the plurality of models.

The foregoing content specifies the calculation duration, thereby effectively improving feasibility of this solution.

In an optional implementation, the first duration is an estimated duration for determining original information, or the first duration is an estimated duration for determining feature information.

Both the original information and the feature information are used to determine the target information.

The foregoing content specifies the first duration, thereby effectively improving feasibility of this solution.

In an optional implementation, when the target information is determined based on a plurality of pieces of original information, the calculation duration is determined based on at least a first duration and a third duration. The first duration is determined based on a type of the target information. The third duration is determined based on a quantity of the plurality of pieces of original information, and at least one of the first information and the second information.

According to the foregoing content, when the target information is determined based on the plurality of pieces of original information, in determining the calculation duration, in addition to factors such as the type of the target information and the processing capability of the terminal device, the quantity of the plurality of pieces of original information further needs to be considered to determine the calculation duration, thereby further improving accuracy of the calculation duration.

In an optional implementation, when the target information is performance information of a second model, the calculation duration is determined based on at least a first duration and a fourth duration. The first duration is determined based on a type of the target information. The fourth duration is determined based on the first information and a method for determining the performance information of the second model.

According to the foregoing content, when the target information is the performance information of the second model, in determining the calculation duration, in addition to factors such as the type of the target information and the processing capability of the terminal device, the method for determining the performance information of the second model further needs to be considered to determine the calculation duration, thereby further improving accuracy of the calculation duration.

In an optional implementation, when there are a plurality of pieces of the target information, the calculation duration is determined based on at least the first duration, the second duration, and a quantity of pieces of the target information.

According to the foregoing content, when the plurality of pieces of the target information exist, in determining the calculation duration, in addition to factors such as the type of the target information, the processing capability of the terminal device, and the model complexity of the first model, the quantity of the plurality of pieces of the target information also needs to be considered to determine the calculation duration, thereby further improving accuracy of the calculation duration.

In an optional implementation, the calculation duration further includes a duration for generating uplink control information (uplink control information, UCI) based on the target information.

According to the foregoing content, in determining the calculation duration, the duration for generating the UCI may be further included, thereby further improving accuracy of the calculation duration.

In an optional implementation, the communication device is a terminal device or a network device.

Based on the possible implementation, an application scenario of this application is provided, thereby expanding an application scope of this application.

In an optional implementation, when the communication device is a terminal device, the terminal device may receive, from a network device, indication information indicating that the target information is sent to the network device at a first moment.

In this way, after receiving the indication information, the terminal device may determine the calculation duration, thereby supplementing a procedure of this solution and improving completeness of this solution.

In an optional implementation, the terminal device may further determine, based on the first moment and the calculation duration, whether to send the target information to the network device.

In this way, when the first moment and the calculation duration meet a specific condition, the terminal device may discard the target information without sending the target information to the network device, to save transmission resources of the terminal device.

In an optional implementation, the terminal device may discard the target information when a time difference between a second moment and the first moment is less than the calculation duration. The second moment is determined based on an indication from the network device.

The foregoing content specifies the condition for determining whether to send the target information to the network device, thereby effectively improving feasibility of this solution.

In an optional implementation, when the second moment is determined based on a reference signal indicated by the network device, the terminal device may determine a moment at which the reference signal is received as the second moment, or the terminal device may determine a moment at which the network device sends the reference signal as the second moment.

The foregoing content specifies the second moment, thereby effectively improving feasibility of this solution based on the application scenario of this application.

In an optional implementation, when the communication device is a terminal device, the terminal device may send the first information to a network device.

In an optional implementation, when the communication device is a terminal device, the terminal device may send, to a network device, third information indicating model complexity of one or more models.

In an optional implementation, when the communication device is a terminal device, the terminal device may receive, from a first device, third information indicating model complexity of one or more models.

In this way, the terminal device does not need to independently determine the model complexity of each model, so that computing resources of the terminal device can be saved.

In an optional implementation, when the communication device is a network device, the network device may send, to a terminal device, indication information indicating that the terminal device sends the target information to the network device at a first moment.

In an optional implementation, the network device may further determine the first moment based on the calculation duration.

According to the foregoing content, the network device determines the first moment based on the calculation duration, so that a probability that the terminal device cannot complete calculation of the target information before the first moment can be reduced.

According to a second aspect, a communication apparatus is provided. The communication apparatus may be a communication device or may be deployed in a communication device, for example, a functional module or a chip located in the communication device. The communication apparatus may include a functional unit configured to perform any method provided in the first aspect. Operations performed by each functional unit may be implemented by hardware or by hardware executing corresponding software. The apparatus includes a processing module. The processing module is configured to determine a calculation duration based on target information and at least one of first information and second information.

The calculation duration is an estimated duration for determining the target information, the first information indicates a processing capability of the terminal device, the second information indicates model complexity of a first model, and the first model is used to determine the target information.

According to a third aspect, a communication apparatus is provided. The communication apparatus includes at least one processor. The at least one processor is coupled to at least one memory, and the at least one processor is configured to execute a computer program or instructions stored in the at least one memory, to cause the communication apparatus to perform the communication method according to the first aspect or according to any optional implementation of the first aspect.

According to a fourth aspect, a communication system is provided. The communication system includes a plurality of communication devices, and each communication device is configured to perform the communication method according to the first aspect or according to any optional implementation of the first aspect.

According to a fifth aspect, a computer-readable storage medium is provided, including computer-executable instructions. When the computer-executable instructions run on a computer, the computer is caused to perform any communication method according to the first aspect or according to any optional implementation of the first aspect.

According to a sixth aspect, a chip is provided. The chip includes a processor and an interface circuit. The interface circuit is configured to receive code instructions and transmit the code instructions to the processor. The processor is configured to run the code instructions to perform any communication method according to the first aspect or according to any optional implementation of the first aspect.

According to a seventh aspect, a computer program product is provided, including computer-executable instructions. When the computer-executable instructions run on a computer, the computer is caused to perform any communication method according to the first aspect or according to any optional implementation of the first aspect.

It should be noted that, for technical effects brought by any implementation of any one of the second aspect to the seventh aspect, refer to technical effects brought by a corresponding implementation in the first aspect or any optional implementation of the first aspect. Details are not described herein again.

### BRIEF DESCRIPTION OF DRAWINGS

FIG. 1 is a diagram of a structure of a neural network;
FIG. 2 is a diagram of a system architecture of a communication system according to an embodiment of this application;
FIG. 3 is a diagram of a system architecture of another communication system according to an embodiment of this application;
FIG. 4 is a diagram of composition of a communication apparatus according to an embodiment of this application;
FIG. 5 is a schematic flowchart of a communication method according to an embodiment of this application;
FIG. 6 is a schematic interaction flowchart of a communication method according to an embodiment of this application;
FIG. 7 is a schematic interaction flowchart of another communication method according to an embodiment of this application; and
FIG. 8 is a diagram of a structure of a communication device according to an embodiment of this application.

### DESCRIPTION OF EMBODIMENTS

In descriptions of this application, unless otherwise specified, "/" means "or". For example, A/B may indicate A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

It should be noted that, in this application, terms such as "example" or "for example" are used for representing giving an example, an illustration, or a description. Any embodiment or design scheme described as "example" or "for example" in this application should not be construed as being preferred or having more advantages than another embodiment or design scheme. To be specific, use of the word "example" or "for example" or the like is intended to present a related concept in a specific manner.

"Indicate" may include a direct indication and an indirect indication, or may include an explicit indication and an implicit indication. The description "specific indication information indicates A" or "indication information of A" may include that the indication information directly indicates A or indirectly indicates A, but does not necessarily indicate that the indication information carries A. Information indicated by information is referred to as to-be-indicated information. In a specific implementation process, the to-be-indicated information may be indicated in a plurality of manners. By way of example but not limitation, the to-be-indicated information may be directly indicated, for example, by using the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, a common part of all pieces of information may be identified and indicated in a unified manner, to reduce indication overheads caused by separately indicating same information. Furthermore, specific indication manners may alternatively be various existing indication manners, for example, but not limited to, the foregoing indication manners and various combinations thereof. For details of the various indication manners, refer to the conventional technology. Details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information. The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmitting end device by sending configuration information to a receiving end device. The configuration information may include, for example, but not limited to, one or a combination of at least two of radio resource control signaling, medium access control (medium access control, MAC) layer signaling, and physical layer signaling. The radio resource control signaling includes, for example, radio resource control (radio resource control, RRC) signaling. The MAC layer signaling includes, for example, a MAC control element (control element, CE). The physical layer signaling includes, for example, downlink control information (downlink control information, DCI).

Artificial intelligence (Artificial Intelligence, AI) enables machines to have learning capabilities, accumulate experience, and resolve problems such as natural language understanding, image recognition, and chess playing that can be resolved by humans through experience.

Machine learning is an implementation of artificial intelligence. Machine learning is a method for enabling machines to learn, so that the machines implement functions that cannot be implemented by direct programming. In practice, machine learning is a method for training a model by using data and then using the trained model to make predictions.

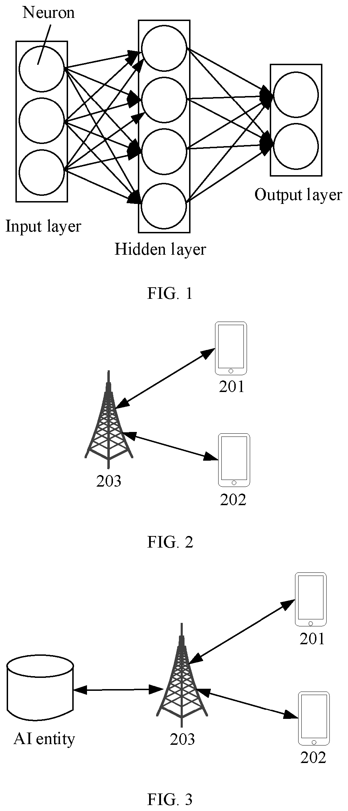

A neural network (neural network, NN) is a specific implementation of machine learning. As shown in FIG. 1, a multi-layer structure of a neural network may include an input layer, a hidden layer, and an output layer. The input layer may process a received numerical value through neurons (Neurons) and transmit a processed result to the intermediate hidden layer. The hidden layer performs processing through neurons and transmits a processed result to the output layer. The output layer performs processing through neurons to obtain a final output. The hidden layer may affect a capability of the neural network in information extraction and function fitting. Increasing a quantity of hidden layers or increasing a width of each hidden layer may improve a function fitting capability of a DNN. It should be understood that the neural network in this application may alternatively be referred to as a neural network model.

The neural network may include a feedforward neural network (Feedforward Neural Network, FNN), a convolutional neural network (Convolutional Neural Network, CNN), and a recurrent neural network (Recurrent Neural Network, RNN).

The convolutional neural network is a neural network specially designed to process data with a grid-like structure, for example, time-series data and image data. The convolutional neural network does not utilize all input information at once for computation, but instead uses a window with a fixed size to extract partial information for convolution operations, thereby significantly reducing an amount of computation of model parameters. In addition, based on different types of information extracted via windows, the windows may employ different convolution kernel operations, so that the convolutional neural network can better extract features of input data.

The recurrent neural network is a neural network that utilizes feedback time-series information. Inputs of the recurrent neural network include a new input value at a current moment and an output value of the recurrent neural network at a previous moment. The recurrent neural network is suitable for extracting sequential features with temporal correlations and is applicable to fields such as speech recognition and channel encoding and decoding.

A characteristic of the feedforward neural network is that neurons between adjacent layers are fully connected in a one-to-one manner. The feedforward neural network typically requires substantial storage space, resulting in high computational complexity of the feedforward neural network.

Network structures of the feedforward neural network, the convolutional neural network, the recurrent neural network, and other neural network are all constructed based on neurons. As described above, for each neuron, a weighted summation operation is performed on input values of the neuron, and a weighted summation result is calculated by using a nonlinear function, to obtain a corresponding output value. A weight of each neuron in the neural network and the nonlinear function may be referred to as parameters of the neural network (or model parameters of the neural network).

With the continuous development of artificial intelligence, neural networks have been increasingly applied in the field of communication technologies. The neural networks assist a communication device in completing some compute tasks/processing tasks, thereby improving communication performance. For example, a neural network may be used to determine feedback information. In an example, the feedback information is compressed downlink channel information. After obtaining downlink channel information based on a reference signal, user equipment may input the downlink channel information into a neural network on the UE side to obtain compressed downlink channel information. Then, the UE may send the compressed downlink channel information to a base station, and the base station inputs the compressed downlink channel information into a neural network on the base station side to recover the downlink channel information.

It can be learned from the foregoing that a calculation duration for the UE to report the feedback information may include a calculation duration of the neural network. If the UE cannot complete calculation by reporting time required by the base station, the UE fails to send the feedback information to the base station on schedule. Therefore, the UE needs to determine a calculation duration required for obtaining the feedback information, so that the UE can determine, based on the calculation duration, whether the feedback information can be obtained before the reporting time required by the base station, to determine whether the feedback information can be sent to the base station on schedule.

In an example, the UE may determine the calculation duration based on content of the feedback information.

For example, when the feedback information is channel state information (channel state information, CSI), the UE may determine, based on predefined durations corresponding to different CSI codebooks, the calculation duration for reporting the CSI.

In another example, the UE may determine the calculation duration based on model complexity of a model on the UE side.

For example, the UE may determine the calculation duration based on factors such as a model structure and a parallelism level of the neural network model.

However, in the foregoing two manners, impact of other factors on the calculation duration is ignored, and consequently, accuracy of the calculation duration determined by the UE is reduced. As a result, the UE cannot accurately determine, based on the calculation duration, whether to send the compressed feedback information to the base station.

Therefore, how to accurately determine the calculation duration is an urgent problem to be resolved.

In view of this, embodiments of this application provide a communication method. The method may be applied to any communication device, such as a terminal device or a network device. The communication device may obtain at least one of first information and second information, where the first information indicates a processing capability of a terminal device, and the second information indicates model complexity of a first model, and determine a calculation duration based on target information and at least one of the first information and the second information. The calculation duration is an estimated duration for determining the target information. The first model is used to determine the target information.

It can be learned that, in embodiments of this application, the calculation duration is determined based on information from a plurality of dimensions, for example, the target information and at least one of the processing capability of the terminal device and the model complexity of the first model. Therefore, accuracy of the determined calculation duration can be effectively improved.

FIG. 2 is a diagram of a system architecture of a communication system according to an embodiment of this application. In the system architecture diagram, the communication system may include a plurality of communication devices, for example, a terminal device 201, a terminal device 202, and a network device 203 shown in FIG. 2. The terminal device 201 and the terminal device 202 may access the network device 203, and communicate with the network device 203.

The terminal device in this embodiment of this application may be UE in a 5th generation mobile communication technology (5th Generation, 5G) network or a public land mobile network (Public Land Mobile Network, PLMN) evolved after 5G, an access terminal, a terminal unit, a subscriber station, a terminal station, a mobile station, a mobile console, a remote station, a remote terminal, terminal equipment (Terminal Equipment, TE), a mobile device, a wireless communication device, a terminal agent, a tablet computer (Pad), a handheld device with a wireless communication function, a computing device or another processing device connected to a wireless modem, a vehicle-mounted device, a vehicle-mounted transceiver unit, a wearable device, or a terminal apparatus. The access terminal may be a cellular phone, a cordless phone, a Session Initiation Protocol (Session Initiation Protocol, SIP) phone, a wireless local loop (Wireless Local Loop, WLL) station, a personal digital assistant (Personal Digital Assistant, PDA), a handheld device with a wireless communication function, a computing device or another processing device connected to a wireless modem, a vehicle-mounted device, an uncrewed aerial vehicle, a robot, a smart point of sale (Point of Sale, POS) terminal, customer-premises equipment (Customer-Premises Equipment, CPE), a wearable device, a virtual reality (Virtual Reality, VR) terminal device, an augmented reality (Augmented Reality, AR) terminal device, a wireless terminal in industrial control (Industrial Control), a wireless terminal in self-driving (Self-Driving), a wireless terminal in remote medical (Remote Medical), a wireless terminal in a smart grid (Smart Grid), a wireless terminal in transportation safety (Transportation Safety), a wireless terminal in a smart city (Smart City), or a wireless terminal in a smart home (Smart Home). Alternatively, the terminal device may be a terminal with a communication function in the internet of things (Internet of Things, IoT), for example, a terminal in V2X (for example, a vehicle-to-everything device), a terminal in D2D communication, or a terminal in M2M communication. The terminal device may be mobile or fixed.

A form of the terminal device is not limited in embodiments of this application. An apparatus configured to implement a function of the terminal device may be a terminal device, or may be an apparatus, for example, a chip system, that can support the terminal device in implementing the function. The apparatus may be mounted in a terminal device or used in a manner of matching a terminal device. In this embodiment of this application, the chip system may include a chip, or may include a chip and another discrete component.

A quantity of terminal devices is not limited in this embodiment of this application, and may be greater or less than the number of terminal devices shown in FIG. 2.

The network device in this application may include a device configured to communicate with the terminal device. For example, the network device may be an evolved base station (NodeB, eNB, or Evolved NodeB, e-NodeB) in a long term evolution (Long Term Evolution, LTE) system or an LTE-advanced (LTE-advanced, LTE-A) system, such as a conventional macro base station eNB and a micro base station eNB in a heterogeneous network scenario. Alternatively, the network device may include a next generation NodeB (Next Generation NodeB, gNB) in an NR system. Alternatively, the network device may include a transmission reception point (Transmission Reception Point, TRP), a home base station (for example, home evolved NodeB or home NodeB, HNB), a baseband unit (Baseband Unit, BBU), a baseband unit pool (BBU Pool), or a wireless fidelity (Wireless Fidelity, Wi-Fi) access point (Access Point, AP). Alternatively, the network device may include a base station in a non-terrestrial network (Non-Terrestrial Network, NTN), that is, may be deployed on an aerial platform or a satellite. In the NTN, the network device may be used as a layer 1 (L1) relay (Relay), may be used as a base station, or may be used as an integrated access and backhaul (Integrated Access and Backhaul, IAB) node. Alternatively, the network device may be a device that implements a base station function in the IoT, such as a device that implements a base station function for uncrewed aerial vehicle communication, V2X, D2D, or machine-to-machine (Machine-To-Machine, M2M) communication.

Optionally, the base station in this embodiment of this application may be an integrated base station, or may be a base station including a central unit (Central Unit, CU) and a distributed unit (Distributed Unit, DU). The base station including the CU and the DU may also be referred to as a CU-DU split base station. For example, the base station includes a gNB-CU and a gNB-DU. The CU may be further separated into a CU control plane (CU control plane, CU-CP) and a CU user plane (CU user plane, CU-CP). For example, the base station includes a gNB-CU-CP, a gNB-CU-UP, and a gNB-DU.

Optionally, the base station in embodiments of this application may include various forms of base stations, for example, a macro base station, a micro base station (also referred to as a small cell), a relay station, an access point, a home base station, a TRP, a transmitting point (Transmitting Point, TP), or a mobile switching center. This is not specifically limited in embodiments of this application.

A form of the network device is not limited in embodiments of this application. An apparatus for implementing a function of the network device may be a network device, or may be an apparatus, for example, a chip system, that can support the network device in implementing the function. The apparatus may be mounted in the network device or used together with the network device.

It should be noted that FIG. 2 is an example accompanying drawing, and a quantity of terminal devices shown in FIG. 2 and names of interfaces between the devices in FIG. 2 are not limited. In addition to the network elements shown in FIG. 2, the communication system shown in FIG. 2 may further include other devices, for example, an access network device. This is not limited.

The communication system provided in embodiments of this application may further include an AI entity. The AI entity may be an AI network element or an AI module. This is not limited in this embodiment of this application. A neural network model may be deployed in the AI entity to perform AI-related operations such as constructing a training dataset and training a model.

In some embodiments, the AI entity may be integrated into the network device 203 shown in FIG. 2, such that after receiving data that is related to an AI model and that is reported by a terminal device, the network device 203 may process the data by using the AI entity to obtain a corresponding processing result, and may send the processing result to the terminal device.

In some other embodiments, as shown in FIG. 3, the AI entity may be independent of the network device. After receiving data that is related to an AI model and that is reported by the terminal device, the network device 203 may send the data to the AI entity. After processing the data to obtain a corresponding processing result, the AI entity may transmit the processing result to the network device, and the network device may then transmit the processing result to the terminal device.

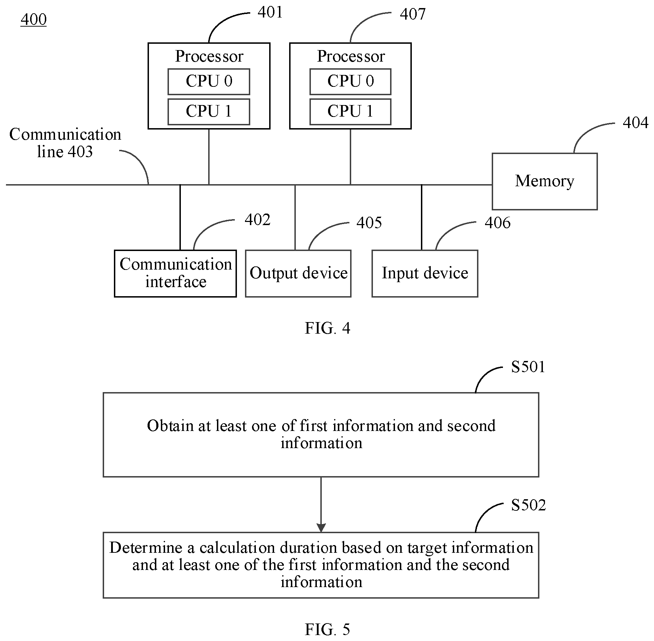

In a specific implementation, the communication devices in FIG. 2 or FIG. 3 may adopt the composition structure shown in FIG. 4, or include the components shown in FIG. 4. FIG. 4 is a diagram of composition of a communication apparatus 400 according to an embodiment of this application. The communication apparatus 400 may be a terminal device, or a chip or a system-on-a-chip in a terminal device. Alternatively, the communication apparatus 400 may be a network device, or a chip or a system-on-a-chip in a network device. As shown in FIG. 4, the communication apparatus 400 includes a processor 401, a communication interface 402, and a communication line 403.

Further, the communication apparatus 400 may include a memory 404. The processor 401, the memory 404, and the communication interface 402 may be connected to each other through the communication line 403.

The processor 401 is a central processing unit (central processing unit, CPU), a general purpose processor, a network processor (network processor, NP), a digital signal processor (digital signal processor, DSP), a microprocessor, a microcontroller, a programmable logic device (programmable logic device, PLD), or any combination thereof. Alternatively, the processor 401 may be another apparatus having a processing function, for example, a circuit, a component, or a software module. For example, the processor may have a capability of a network model (for example, a DNN model). This is not limited.

The communication interface 402 is configured to communicate with another device or another communication network. The another communication network may be an Ethernet, a radio access network (radio access network, RAN), a wireless local area network (wireless local area network, WLAN), or the like. The communication interface 402 may be a module, a circuit, a communication interface, or any apparatus that can implement communication.

The communication line 403 is configured to transmit information between the components included in the communication apparatus 400.

The memory 404 is configured to store instructions. The instructions may be a computer program.

The memory 404 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital universal optical disc, a Blu-ray optical disc, or the like), a magnetic disk storage medium or another magnetic storage device, or the like. This is not limited.

It should be noted that the memory 404 may be independent of the processor 401, or may be integrated into the processor 401. The memory 404 may be configured to store instructions, program code, a sample, or the like. The memory 404 may be located inside the communication apparatus 400, or may be located outside the communication apparatus 400. This is not limited. The processor 401 is configured to execute the instructions stored in the memory 404, to implement a communication method provided in the following embodiment of this application and applied to a communication system.

In an example, the processor 401 may include one or more CPUs, for example, a CPU 0 and a CPU 1 in FIG. 4.

In an optional implementation, the communication apparatus 400 includes a plurality of processors. For example, the communication apparatus 400 may further include a processor 407 in addition to the processor 401 in FIG. 4.

In an optional implementation, the communication apparatus 400 further includes an output device 405 and an input device 406. For example, the input device 406 is a keyboard, a mouse, a microphone, a joystick, or another device, and the output device 405 is a display, a speaker (speaker), or another device.

It should be noted that the communication apparatus 400 may be a desktop computer, a portable computer, a network server, a mobile phone, a tablet computer, a wireless terminal, an embedded device, a chip system, or a device having a structure similar to that in FIG. 4. In addition, the composition structure shown in FIG. 4 does not constitute a limitation on the access network device, the core network device, and the terminal device. In addition to the components shown in FIG. 4, the access network device, the core network device, and the terminal device may include more or fewer components than those shown in the figure, or combine some components, or have different component arrangements.

In this embodiment of this application, the chip system may include a chip, or may include a chip and another discrete component.

In addition, actions, terms, and the like in embodiments of this application may be mutually referenced. This is not limited. In embodiments of this application, names of information exchanged between devices, names of parameters in the information, or the like are merely examples. Other names may alternatively be used during specific implementation. This is not limited. The method provided in embodiments of this application may be executed by an access network device, or a component in an access network device, such as a chip, may be executed by a core network device, or a component in a core network device, such as a chip, or may be executed by a terminal device, or a component in the terminal device, such as a chip.

With reference to FIG. 2, the following describes the communication method provided in embodiments of this application by using an example in which the communication device is the terminal device in FIG. 2. FIG. 5 is a schematic flowchart of a communication method according to an embodiment of this application. As shown in FIG. 5, the method includes the following steps.

S501: Obtain at least one of first information and second information.

The first information indicates a processing capability of a terminal device. Specifically, the processing capability of the terminal device may be described as an information processing capability of the terminal device or a computing capability of the terminal device. The following uses the processing capability of the terminal device as an example for description. Specifically, the processing capability of the terminal device may be determined based on a quantity of processors in the terminal device and/or a processing capability of each processor.

The processing capability of each processor may include but is not limited to a computing speed, a storage capability, and a model processing capability of the processor. These capabilities may be collectively referred to as the processing capability of the processor.

The first information may directly indicate the processing capability of the terminal device. For example, the first information includes the processing capability of the terminal device. The first information may include the quantity of processors in the terminal device and/or the processing capability of each processor. Alternatively, the first information may indirectly indicate the processing capability of the terminal device. For example, the first information includes a processing capability level of the terminal device, and the processing capability level is determined based on the processing capability of the terminal device. This is not limited in this embodiment of this application.

The second information indicates model complexity of a first model. The first model is used to determine target information. Specifically, the second information may directly indicate the model complexity of the first model. For example, the second information includes the model complexity of the first model. Alternatively, the second information may indirectly indicate the model complexity of the first model. For example, the second information includes a model complexity level of the first model. This is not limited in this embodiment of this application.

It may be understood that the first model may indicate one model or a plurality of models. Specifically, when one model is required for determining the target information, the first model may indicate the model; or when a plurality of models are required for determining the target information, the first model may indicate the plurality of models.

S502: Determine a calculation duration based on the target information and at least one of the first information and the second information.

The calculation duration is an estimated duration for determining the target information. The estimated duration may be an average duration for obtaining the target information, or may be the shortest duration for obtaining the target information within a preset time range.

In an optional implementation, the calculation duration may be determined based on at least a first duration and a second duration.

The first duration may be determined based on a type of the target information.

The type of the target information may include, but is not limited to, original information and feature information. This is not limited in this embodiment of this application. Both the original information and the feature information are used to determine the target information.

The feature information may include, but is not limited to, an eigenvector. For example, feature information of a channel is a channel eigenvector. This is not limited in this embodiment of this application.

Specifically, the terminal device may determine the first duration based on the type of the target information and a preset type-duration table.

The preset type-duration table may include correspondences between information types and durations. For example, the preset type-duration table may include, but is not limited to, two correspondences: a correspondence between the original information and a duration, and a correspondence between the feature information and a duration. The duration corresponding to the original information may indicate a duration for obtaining the original information, and the duration corresponding to the feature information may indicate a duration for obtaining the feature information.

It should be noted that a correspondence in the preset type-duration table may alternatively be a correspondence among an information identifier, an information type, and a duration. The information identifier indicates an information attribute, such as channel information or model information. This is not limited in this embodiment of this application.

It should be noted that a duration in the preset type-duration table may indicate an average duration for the terminal device to obtain the information of the type within a preset time range, or may be the shortest duration for the terminal device to obtain the information of the type within a preset time range. This is not limited in this embodiment of this application.

The second duration may be determined based on the first information and/or the second information. In other words, the second duration may be determined based on either the processing capability of the terminal device or the processing capability level of the terminal device, and/or either the model complexity of the first model or the model complexity level of the first model. The following uses an example in which the second duration is determined based on the processing capability level of the terminal device and the model complexity level of the first model for description.

It may be understood that when the first model includes a plurality of models, that is, the plurality of models are required for determining the target information, the second duration may be determined based on the first information indicating the processing capability of the terminal device and/or the second information indicating model complexity of the plurality of models.

Specifically, when determining the second duration, the terminal device may first determine the first model used to determine the target information, and then determine the second duration based on the model complexity level of the first model, the processing capability level of the terminal device, and a preset level-duration table. Alternatively, the terminal device may determine the second duration based on the model complexity level of the first model and a preset complexity level-duration table, or the terminal device may determine the second duration based on the processing capability level of the terminal device and a capability level-duration table.

The preset level-duration table may include a correspondence among a model complexity level, a processing capability level of the terminal device, and a duration. For example, when there are two model complexity levels of the model (for example, level 1 and level 2), and there are two processing capability levels of the terminal device (for example, level A and level B), the level-duration table may include four correspondences: a correspondence among the model complexity level 1 of the model, the processing capability level A of the terminal device, and a duration, a correspondence among the model complexity level 1 of the model, the processing capability level B of the terminal device, and a duration, a correspondence among the model complexity level 2 of the model, the processing capability level A of the terminal device, and a duration, and a correspondence among the model complexity level 2 of the model, the processing capability level B of the terminal device, and a duration. In addition, the durations included in the correspondences may be equal or unequal. This is not limited in this embodiment of this application.

The preset complexity level-duration table may include a correspondence between a model complexity level of a model and a duration. For example, when there are two model complexity levels of the model (for example, level 1 and level 2), the complexity level-duration table may include two correspondences: a correspondence between the model complexity level 1 of the model and a duration, and a correspondence between the model complexity level 2 of the model and a duration. In addition, the durations included in the correspondences may be equal or unequal. This is not limited in this embodiment of this application.

When the first model includes a plurality of models, the model complexity level of the first model may be an average value of model complexity levels of the plurality of models, or may be a sum of model complexity levels of the plurality of models. This is not limited in this embodiment of this application. Alternatively, when the first model includes a plurality of models, the second duration is a sum of durations corresponding to the models, or is an average value of durations corresponding to the models. This is not limited in this embodiment of this application. For a method for determining the duration corresponding to each model, refer to the foregoing method.

When the calculation duration is determined based on the first duration and the second duration, the calculation duration may be a sum of the first duration and the second duration, or a result obtained by performing weighted summation on the first duration and the second duration. Alternatively, a table is preset for a correspondence among a calculation duration, a first duration, and a second duration. This is not limited in this embodiment of this application. The following uses an example in which a sum of the first duration and the second duration is used as the calculation duration for description.

For example, it is assumed that the preset type-duration table includes two correspondences: a correspondence between the original information and a 10-millisecond duration, and a correspondence between the feature information and a 15-millisecond duration. The preset level-duration table includes four correspondences: a correspondence among the model complexity level 1 of the model, the processing capability level A of the terminal device, and a 5-millisecond duration, a correspondence among the model complexity level 1 of the model, the processing capability level B of the terminal device, and a 10-millisecond duration, a correspondence among the model complexity level 2 of the model, the processing capability level A of the terminal device, and a 10-millisecond duration, and a correspondence among the model complexity level 2 of the model, the processing capability level B of the terminal device, and a 15-millisecond duration.

In some embodiments, it is assumed that the target information is compressed channel information of a channel M, the first model is an AI encoder, a model complexity level of the AI encoder is 2, and a processing capability level of the terminal device is A. On this basis, the duration for the terminal device to determine the target information may include at least: (1) an estimated duration, that is, the first duration, for obtaining the channel information of the channel M; (2) an estimated duration, that is, the second duration, for the AI encoder to compress the channel information of the channel M to obtain the compressed channel information of the channel M.

The channel information of the channel M is the original information. Therefore, when determining the calculation duration, the terminal device may use, based on the preset type-duration table, the 10-millisecond duration corresponding to the original information as the first duration, determine, based on the model complexity level 2 of the AI encoder and the processing capability level A of the terminal device, that the second duration is 10 milliseconds based on the preset level-duration table, and then determine that the calculation duration is 20 milliseconds based on the 10-millisecond first duration and the 10-millisecond second duration.

In some other embodiments, it is assumed that the target information is a compressed channel eigenvector of a channel M, the first model is an AI encoder, a model complexity level of the AI encoder is 2, and a processing capability level of the terminal device is A. On this basis, the duration for the terminal device to determine the target information may include at least: (1) an estimated duration, that is, the first duration, for decomposing the channel M in a preset decomposition manner to obtain the channel eigenvector; (2) an estimated duration, that is, the second duration, for the AI encoder to compress the channel eigenvector of the channel M to obtain the compressed channel eigenvector of the channel M.

The preset decomposition manner may include, but is not limited to, singular value decomposition (Singular Value Decomposition, SVD). This is not limited in this embodiment of this application.

The channel eigenvector of the channel M is the feature information. Therefore, when determining the calculation duration, the terminal device may use, based on the preset type-duration table, the 15-millisecond duration corresponding to the feature information as the first duration, determine, based on the model complexity level 2 of the AI encoder and the processing capability level A of the terminal device, that the second duration is 10 milliseconds based on the preset level-duration table, and then determine that the calculation duration is 25 milliseconds based on the 15-millisecond first duration and the 10-millisecond second duration.

It can be learned from the foregoing method that, the calculation duration is not determined based on information from a single dimension, but is determined based on information from a plurality of dimensions, for example, the processing capability of the terminal device, the model complexity of the first model, and the target information. Therefore, accuracy of the determined calculation duration can be effectively improved.

In an optional implementation, when the target information is determined based on a plurality of pieces of original information, the calculation duration may be determined based on at least a first duration and a third duration. For example, the calculation duration may be determined based on the first duration and the third duration, or may be determined based on the first duration, the second duration, and the third duration. This is not limited in this embodiment of this application.

The third duration may be determined based on a quantity of the plurality of pieces of original information, and at least one of the first information and the second information. Specifically, the third duration may be determined based on a specific application scenario. For example, in some embodiments, when the application scenario is predicting the channel information for a future moment based on channel information of the plurality of known channels, the third duration may be determined based on the channel information of the plurality of known channels, algorithm complexity of a prediction algorithm used to predict the channel information for the future moment, and the processing capability of the terminal device by using the following Formula 1. This is not limited in this embodiment of this application.

The channel information of the known channels is optional original information. $T 3 = {X}_{1} ∗ {X}_{2} ∗ {X}_{3} + {C}_{1}$ (Formula 1)

T3 represents the third duration, X₁ indicates the algorithm complexity of the prediction algorithm, X₂ indicates a quantity of pieces of original information, X₃ indicates the processing capability level of the terminal device, and C₁ is an offset.

Assuming that the application scenario is predicting channel information for a future moment based on channel information of a channel M and a channel B, the third duration is determined based on channel information of a plurality of known channels, algorithm complexity of a prediction algorithm used to predict the channel information for the future moment, and a processing capability level of the terminal device. The first model is an AI encoder.

Based on this, in some embodiments, the duration for the terminal device to determine the target information may include: (1) an estimated duration, that is, the first duration, for obtaining the channel information of the channel M and the channel information of the channel B; and (2) an estimated duration, that is, the third duration, for predicting the channel information for a future moment by using the prediction algorithm based on the channel information of the channel M and the channel information of the channel B.

In some other embodiments, the duration for the terminal device to determine the target information may include: (1) an estimated duration, that is, the first duration, for obtaining the channel information of the channel M and channel information of the channel B; (2) an estimated duration, that is, the third duration, for predicting the channel information for a future moment by using the prediction algorithm based on the channel information of the channel M and the channel information of the channel B; and (3) an estimated duration, that is, the second duration, for the AI encoder to compress the predicted channel information for the future moment to obtain compressed channel information for the future moment.

For a manner of determining the first duration and the second duration, refer to the foregoing content. Details are not described herein again.

In some embodiments, when determining the third duration, the terminal device may first determine, based on algorithm complexity of the prediction algorithm, the processing capability level of the terminal device, and a preset algorithm complexity-capability level-duration table, a duration corresponding to the prediction algorithm and the processing capability level of the terminal device, and finally determine the third duration based on the duration and the quantity of pieces of original information.

The preset algorithm complexity-capability level-duration table may include a correspondence among algorithm complexity, a processing capability level of the terminal device, and a duration, for example, a correspondence among algorithm complexity of 10, a processing capability level A of the terminal device, and a duration, and a correspondence among the algorithm complexity of 10, a processing capability level B of the terminal device, and a duration.

In some other embodiments, when determining the third duration, the terminal device may first determine the third duration based on the algorithm complexity of the prediction algorithm, the processing capability level of the terminal device, the quantity of pieces of original information, and a preset algorithm complexity-capability level-quantity-duration table.

The preset algorithm complexity-capability level-quantity-duration table may include a correspondence among algorithm complexity, a processing capability level of the terminal device, a quantity of pieces of original information, and a duration, for example, a correspondence among algorithm complexity of 10, a processing capability level A of the terminal device, the quantity of pieces of original information being 2, and a duration, and a correspondence among the algorithm complexity of 10, a processing capability level B of the terminal device, the quantity of pieces of original information being 2, and a duration.

In some other embodiments, when determining the third duration, the terminal device may first determine the third duration based on the algorithm complexity of the prediction algorithm, the quantity of pieces of the original information, and a preset algorithm complexity-quantity-duration table.

In some other embodiments, when determining the third duration, the terminal device may first determine the third duration based on the processing capability level of the terminal device, the quantity of pieces of original information, and the preset capability level-quantity-duration table.

Assuming that an application scenario is predicting channel eigenvectors for a future moment based on channel information of a channel M and a channel B, the third duration is determined based on the channel information of the plurality of known channels, algorithm complexity of a prediction algorithm used to predict the channel information for the future moment, and a processing capability level of the terminal device. The first model is an AI encoder.

Based on this, in some embodiments, the duration for the terminal device to determine the target information may include at least: (1) an estimated duration, that is, the first duration, for obtaining a channel eigenvector of the channel M and a channel eigenvector of the channel B by respectively decomposing the channel M and the channel B in a preset decomposition manner; and (2) an estimated duration, that is, the third duration, for predicting channel eigenvectors for a future moment based on the channel eigenvector of the channel M and the channel eigenvector of the channel B by using a prediction algorithm.

In some other embodiments, the duration for the terminal device to determine the target information may include at least: (1) an estimated duration, that is, the first duration, for obtaining a channel eigenvector of the channel M and a channel eigenvector of the channel B by respectively decomposing the channel M and the channel B in a preset decomposition manner; (2) an estimated duration, that is, the third duration, for predicting channel eigenvectors for a future moment based on the channel eigenvector of the channel M and the channel eigenvector of the channel B by using the prediction algorithm; and (3) an estimated duration, that is, the second duration, for the AI encoder to compress the predicted channel eigenvectors for the future moment to obtain the compressed channel eigenvectors for the future moment.

For a manner of determining the first duration, the second duration, and the third duration, refer to the foregoing content. Details are not described herein again.

According to the foregoing content, when the target information is determined based on the plurality of pieces of original information, in determining the calculation duration, in addition to factors such as the type of the target information, the processing capability of the terminal device, and the model complexity of the first model, the quantity of the plurality of pieces of original information also needs to be considered to determine the calculation duration, thereby further improving accuracy of the calculation duration.

In an optional implementation, when the target information is performance information of a second model, the calculation duration may be determined based on at least a first duration and a fourth duration. For example, the calculation duration may be determined based on the first duration and the fourth duration, or may be determined based on the first duration, the second duration, and the fourth duration. This is not limited in this embodiment of this application.

The fourth duration may be determined based on the first information and a method for determining the performance information of the second model.

The second model may be the same as or different from the first model. This is not limited in this embodiment of this application.

The performance information of the second model may be determined based on a type of the second model. For example, when the second model is an AI decoder, the performance information of the second model may be information recovery precision of the AI decoder, that is, precision of information obtained by decoding compressed information by using the AI decoder. The performance information of the second model is not limited in this embodiment of this application.

The method for determining the performance information of the second model may be indicated by the network device, or may be randomly selected by the terminal device from a plurality of preset methods for determining model performance information. The method for determining the performance information of the second model is not limited in this embodiment of this application.

Assuming that the target information is the information recovery precision of the AI decoder deployed on the network device side, the method for determining the performance information of the second model is: determining the performance information of the second model based on the original channel information.

On this basis, in some embodiments, the duration for the terminal device to determine the target information may include: (1) an estimated duration, that is, the first duration, for obtaining the original channel information, and (2) an estimated duration, that is, the fourth duration, for determining the information recovery precision of the AI decoder based on the processing capability level of the terminal device and the method for determining the performance information of the second model.

For a manner of determining the first duration, refer to the foregoing content. Details are not described herein again.

In some other embodiments, when determining the fourth duration, the terminal device may determine, based on an identifier of the method for determining the performance information of the second model, the processing capability level of the terminal device, and a preset method identifier-capability level-duration table, the estimated duration, that is, the fourth duration, for determining the performance information of the second model.

The preset method identifier-capability level-duration table may include a correspondence among a method for determining the performance information of the second model, a processing capability level of the terminal device, and a duration.

Assuming that the target information is the information recovery precision of the AI decoder deployed on a network device side, the method for determining the performance information of the second model is: determining the performance information of the second model based on a reference model, where an input of the reference model is an output of the encoder, and an output of the reference model is decoded original channel information.

The reference model, the same as or similar to the second model, is deployed on a terminal device side.

The reference model may be indicated by the network device, or may be randomly selected by the terminal device. This is not limited in this embodiment of this application.

On this basis, in some embodiments, the duration for the terminal device to determine the target information may include: (1) an estimated duration, that is, the first duration, for obtaining the original channel information; (2) an estimated duration, that is, the second duration, for the AI encoder to compress the original channel information to obtain compressed original channel information; and (3) an estimated duration for inputting the compressed original channel information into the reference model to obtain decoded original channel information, and an estimated duration, that is, the fourth duration, for determining the information recovery precision of the AI decoder based on a target precision evaluation algorithm and the processing capability level of the terminal device.

For a manner of determining the first duration and the second duration, refer to the foregoing content. Details are not described herein again.

The target precision evaluation algorithm may be sent by the network device to the terminal device, or may be randomly selected by the terminal device from a plurality of preset precision evaluation algorithms, or may be preset. This is not limited in this embodiment of this application.

When determining the fourth duration, the terminal device may first determine, based on an identifier of the AI decoder or the reference model and the preset decoder-duration table, an estimated duration for inputting the compressed original channel information into the reference model to obtain the decoded original channel information, or determine an estimated duration with reference to the foregoing method for determining the second duration. Then, the terminal device may determine, based on the algorithm complexity of the target precision evaluation algorithm, the processing capability level of the terminal device, and the preset algorithm complexity-capability level-duration table, an estimated duration for calculating the performance information of the second model, and finally determine the fourth duration based on the estimated duration for inputting the compressed original channel information into the reference model to obtain the decoded original channel information and the estimated duration for calculating the performance information of the second model.

The decoder-duration table may include a correspondence between the identifier of the decoder or the reference model and a duration, for example, a correspondence between a decoder A and a duration, and a correspondence between a decoder B and a duration.

The algorithm complexity-capability level-duration table may include a correspondence among algorithm complexity, a capability level of the terminal device, and a duration, for example, a correspondence among algorithm complexity of 20, a capability level A of the terminal device, and a duration, and a correspondence among algorithm complexity of 25, a capability level B of the terminal device, and a duration.

Assuming that the target information is the information recovery precision of the AI decoder deployed on the network device side, the method for determining the performance information of the second model is: determining the performance information of the second model based on the channel eigenvector of the original channel information.

On this basis, in some embodiments, the duration for the terminal device to determine the target information may include: (1) an estimated duration, that is, the first duration, for obtaining the channel eigenvector of the original channel information, and (2) an estimated duration, that is, the fourth duration, for determining the information recovery precision of the AI decoder based on the processing capability level of the terminal device and the method for determining the performance information of the second model.

For a manner of determining the first duration and the fourth duration, refer to the foregoing content. Details are not described herein again.

Assuming that the target information is the information recovery precision of the AI decoder deployed on a network device side, the method for determining the performance information of the second model is: determining the performance information of the second model based on a reference model, where an input of the reference model is an output of the encoder (that is, the compressed channel eigenvector of the original channel information), and an output of the reference model is decoded original channel information (that is, the decoded channel eigenvector of the original channel information).

On this basis, the duration for the terminal device to determine the target information may include at least: (1) an estimated duration, that is, the first duration, for obtaining a channel eigenvector of the original channel information; (2) an estimated duration, that is, the second duration, for the AI encoder to compress the channel eigenvector of the original channel information to obtain compressed channel eigenvector of the original channel information; and (3) an estimated duration for inputting the compressed channel eigenvector of the original channel information into the reference model to obtain decoded channel eigenvector of the original channel information, and an estimated duration, that is, the fourth duration, for determining information recovery precision of the AI decoder based on the target precision evaluation algorithm and the processing capability level of the terminal device.

For a manner of determining the first duration, the second duration, and the fourth duration, refer to the foregoing content. Details are not described herein again.

According to the foregoing content, when the target information is the performance information of the second model, in determining the calculation duration, in addition to factors such as the type of the target information, the processing capability of the terminal device, and the model complexity of the first mode, the method for determining the performance information of the second model also needs to be considered to determine the calculation duration, thereby further improving accuracy of the calculation duration.

In addition, when the network device intends to determine the performance information of the second model, in addition to directly indicating the target information as the performance information of the second model and indicating that the terminal device reports the target information, the network device may further indicate the target information as information such as channel information and compressed channel information, or a channel eigenvector and a compressed channel eigenvector, so that the network device can determine the performance information of the second model based on the target information and the second model deployed by the network device.

The following uses an example in which the target information is the channel information and the compressed channel information to describe a manner in which the terminal device determines the calculation duration of the target information.

In some embodiments, it is assumed that the target information includes channel information of a channel M and compressed channel information of the channel M, the first model is an AI encoder, a model complexity level of the AI encoder is 2, and the processing capability level of the terminal device is A. On this basis, the duration for the terminal device to determine the target information may include at least: (1) an estimated duration, that is, the first duration, for obtaining the channel information of the channel M; (2) an estimated duration, that is, the second duration, for the AI encoder to compress the channel information of the channel M to obtain the compressed channel information of the channel M.

The channel information of the channel M is the original information. Therefore, when determining the calculation duration, the terminal device may use, based on the preset type-duration table, the 10-millisecond duration corresponding to the original information as the first duration, determine, based on the model complexity level 2 of the AI encoder and the processing capability level A of the terminal device, that the second duration is 10 milliseconds based on the preset level-duration table, and then determine that the calculation duration is 20 milliseconds based on the 10-millisecond first duration and the 10-millisecond second duration.

In an optional implementation, when there are a plurality of pieces of the target information, the calculation duration may be determined based on at least the first duration, the second duration, and the quantity of pieces of the target information.

The plurality of pieces of the target information may be indicated by the network device, or may be randomly selected by the terminal device. This is not limited in this embodiment of this application.

Specifically, after determining the first duration and the second duration, the terminal device may determine the calculation duration according to the following Formula 2: $T = \left(T1+T2\right) ∗ n + {C}_{2}$ (Formula 2)

*T* represents the calculation duration, *T*1 represents the first duration, *T*2 represents the second duration, n represents the quantity of target information, and C₂ is an offset.

For example, it is assumed that the preset type-duration table includes two correspondences: a correspondence between the original information and a 10-millisecond duration, and a correspondence between the feature information and a 15-millisecond duration. The preset level-duration table includes four correspondences: a correspondence among the model complexity level 1 of the model, the processing capability level A of the terminal device, and a 5-millisecond duration, a correspondence among the model complexity level 1 of the model, the processing capability level B of the terminal device, and a 10-millisecond duration, a correspondence among the model complexity level 2 of the model, the processing capability level A of the terminal device, and a 10-millisecond duration, and a correspondence among the model complexity level 2 of the model, the processing capability level B of the terminal device, and a 15-millisecond duration.

In some embodiments, it is assumed that a quantity of the plurality of pieces of the target information is 2, where one piece of target information is channel information of a channel M and compressed channel information of the channel M, and the other piece of target information is channel information of a channel B and compressed channel information of the channel B. The first model is an AI encoder, a model complexity level of the AI encoder is 2, and a processing capability level of the terminal device is A.

On this basis, the duration for the terminal device to determine the target information may include at least: (1) a duration for obtaining the channel information of the channel M, or an estimated duration for obtaining the channel information of the channel B, that is, the first duration; (2) an estimated duration for compressing the channel information of the channel M by using an AI encoder to obtain the compressed channel information of the channel M, or an estimated duration for compressing the channel information of the channel B by using an AI encoder to obtain the compressed channel information of the channel B, that is, the second duration.

Both the channel information of the channel M and the channel information of the channel B are the original information, and the AI encoder used to compress the channel information of the channel M is the same as that used to compress the channel information of the channel B. In other words, the AI encoders have the same model complexity level. Therefore, when determining the calculation duration, the terminal device may use, based on the preset type-duration table, the 10-millisecond duration corresponding to the original information as the first duration, determine, based on the model complexity level 2 of the AI encoder and the processing capability level A of the terminal device, that the second duration is 10 milliseconds based on the preset level-duration table, and then according to Formula 2, determine that the calculation duration is 40 milliseconds based on the 10-millisecond first duration, the 10-millisecond second duration, and the quantity of the original information being 2.

In some embodiments, it is assumed that a quantity of pieces of target information is 2, where one piece of target information is a channel eigenvector of a channel M and a compressed channel eigenvector of the channel M, and the other piece of target information is a channel eigenvector of a channel B and a compressed channel eigenvector of the channel B. The first model is an AI encoder, a model complexity level of the AI encoder is 2, and a processing capability level of the terminal device is A.

On this basis, the duration for the terminal device to determine the target information may include at least: (1) a duration for obtaining a channel eigenvector of the channel M, or an estimated duration for obtaining a channel eigenvector of the channel B, that is, the first duration; (2) an estimated duration for compressing the channel eigenvector of the channel M by using an AI encoder to obtain the compressed channel eigenvector of the channel M, or an estimated duration for compressing the channel eigenvector of the channel B by using an AI encoder to obtain the compressed channel eigenvector of the channel B, that is, the second duration.

Both the channel eigenvector of the channel M and the channel eigenvector of the channel B are the feature information, and the AI encoder used to compress the channel eigenvector of the channel M is the same as that used to compress the channel eigenvector of the channel B. In other words, the AI encoders have a same model complexity level. Therefore, when determining the calculation duration, the terminal device may use, based on the preset type-duration table, the 15-millisecond duration corresponding to the original information as the first duration, determine, based on the model complexity level 2 of the AI encoder and the processing capability level A of the terminal device, that the second duration is 10 milliseconds based on the preset level-duration table, and then according to Formula 1, determine that the calculation duration is 50 milliseconds based on the 15-millisecond first duration, the 10-millisecond second duration, and the quantity of pieces of original information being 2.

According to the foregoing content, when the plurality of pieces of the target information exist, in determining the calculation duration, in addition to factors such as the type of the target information, the processing capability of the terminal device, and the model complexity of the first model, the quantity of the plurality of pieces of the target information also needs to be considered to determine the calculation duration, thereby further improving accuracy of the calculation duration.

In an optional implementation, in addition to being determined based on the preset type-duration table, the first duration may be determined based on complexity of an algorithm for determining the original information and/or a processing capability of the terminal device, or may be determined based on complexity of an algorithm for determining the feature information and/or a processing capability of the terminal device. This is not limited in this embodiment of this application.

In an optional implementation, the calculation duration may further include a duration of generating UCI based on the target information.

Specifically, the terminal device may use a preset duration as a duration for generating, based on the target information, UCI that carries the target information.

According to the foregoing content, in determining the calculation duration, the estimated duration for generating the UCI may be further included, thereby further improving accuracy of the calculation duration.

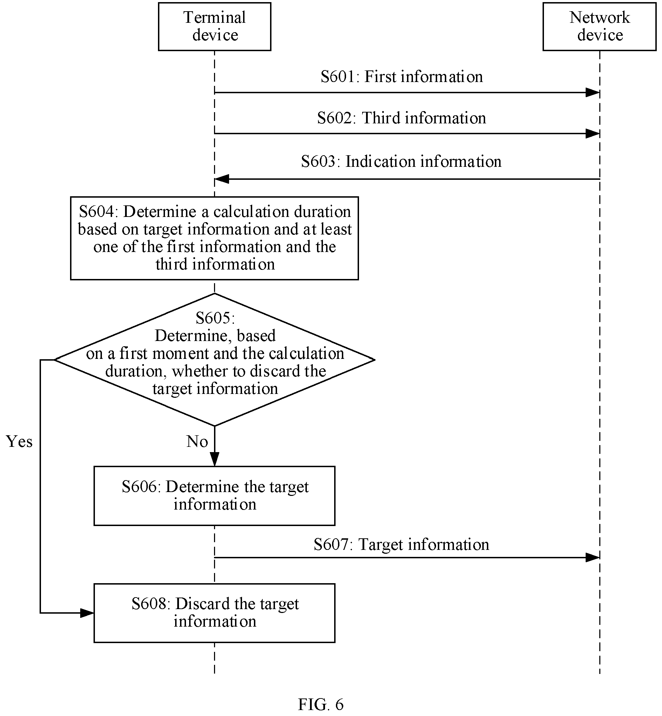

The following describes, in an interaction manner, a communication method provided in an embodiment of this application. FIG. 6 is a schematic interaction flowchart of a communication method according to an embodiment of this application. The method is implemented by a terminal device and a network device. As shown in FIG. 6, the method includes the following steps.

S601: A terminal device sends first information to a network device.

The following separately describes S601 by using an example in which the first information includes a processing capability of the terminal device and an example in which the first information includes a capability level corresponding to the processing capability of the terminal device.

In some embodiments, the terminal device may first obtain a capability of the terminal device, that is, a quantity of processors included in the terminal device. For each processor, the terminal device may obtain a computing speed and a storage capability of the processor, an identifier of a model that can be processed by the processor, and the like, then generate information including the capability of the terminal device, that is, the first information, and send the first information to the network device.

In some other embodiments, the terminal device may first obtain a capability of the terminal device, that is, a quantity of processors included in the terminal device. For each processor, the terminal device may obtain a computing speed and a storage capability of the processor, an identifier of a model that can be processed by the processor, and the like. Then, the terminal device determines, based on the capability of the terminal device and a preset capability level table, a capability level corresponding to the capability of the terminal device, generates information including the capability level corresponding to the capability of the terminal device, that is, the first information, and finally sends the first information to the network device.

The preset capability level table may include a correspondence between a capability and a capability level.

S602: The terminal device sends third information to the network device.

The third information indicates model complexity of one or more models. Specifically, the third information may directly indicate the model complexity of each model. For example, the third information includes the model complexity of each model. Alternatively, the third information may indirectly indicate the model complexity of each model. For example, the third information includes a model complexity level of each model. This is not limited in this embodiment of this application.

The model complexity of each model may be represented by using a preset complexity indicator, or may be represented by using preset model complexity of a model of a specific type to which the model belongs. The model of the specific type to which the model belongs may include a plurality of models that implement a same type of function. For example, assuming that a model A is a type-B model, model complexity of the model A may be represented by using a preset complexity indicator, or may be represented by using preset model complexity of the type-B model.

The preset complexity indicator may include, but is not limited to, at least one of a floating-point operations per second (floating-point operations per second, FLOPS) indicator and a multiply-accumulate operation (multiply-accumulate operation, MAC) indicator. This is not limited in this embodiment of this application.

The plurality of models are models that can be used by the terminal device.

The following describes S602 by using an example in which the model complexity of each model is represented by using a FLOPS indicator, the third information includes the model complexity of each model, and the third information includes the model complexity level of each model.

In some embodiments, the terminal device may first determine models that can be used by the terminal device, then sequentially determine model complexity of the models based on FLOPS indicators, generate information including the model complexity of the models, that is, the third information, and finally send the third information to the network device.

For a manner of determining the model complexity of the models based on the FLOPS indicator, refer to a related technology. Details are not described herein again.

In some other embodiments, the terminal device may first determine models that can be used by the terminal device, and then sequentially determine model complexity of the models based on FLOPS indicators. For each model, the terminal device may determine a model complexity level of the model based on the model complexity of the model and a preset model complexity-level table, generate information including the model complexity level of each model, that is, the third information, and finally send the third information to the network device.

The preset model complexity-level table may include a correspondence between model complexity and a complexity level.

S603: The network device sends indication information to the terminal device.

The indication information indicates the terminal device to send target information to the network device at a first moment.

In an optional implementation, before the network device sends the indication information to the terminal device, a calculation duration may be determined by using the method described in FIG. 5, and the first moment is determined based on the calculation duration, to ensure that the terminal device can send the target information to the network device at the first moment.

S604: The terminal device determines the calculation duration based on the target information and at least one of the first information and third information.

For details, refer to S502. Details are not described herein again.

S605: The terminal device determines, based on the first moment and the calculation duration, whether to discard the target information; and if the target information is not to be discarded, performs S606, or if the target information is to be discarded, performs S608.

In an optional implementation, when a time difference between a second moment and the first moment is less than the calculation duration, the terminal device discards the target information, that is, determines not to send the target information to the network device.

The second moment is determined based on an indication from the network device.

In some embodiments, the second moment may be determined based on a reference signal indicated by the network device. Correspondingly, the terminal device may determine a moment at which the reference signal is received as the second moment. The terminal device may discard the target information when a time difference between a moment at which the reference signal is received and the first moment is less than the calculation duration.

In some other embodiments, the second moment may be determined based on the indication information in S603. Correspondingly, the terminal device may determine a moment at which the indication information is received as the second moment. The terminal device may discard the target information when a time difference between the moment at which the indication information is received and the first moment is less than the calculation duration.

In some other embodiments, the second moment may be determined based on indication information other than the indication information in S603.

S606: The terminal device determines the target information.

S607: The terminal device sends the target information to the network device.

S608: Discard the target information.

After determining, based on the first moment and the calculation duration, not to send the target information to the network device, the terminal device may directly discard the target information.

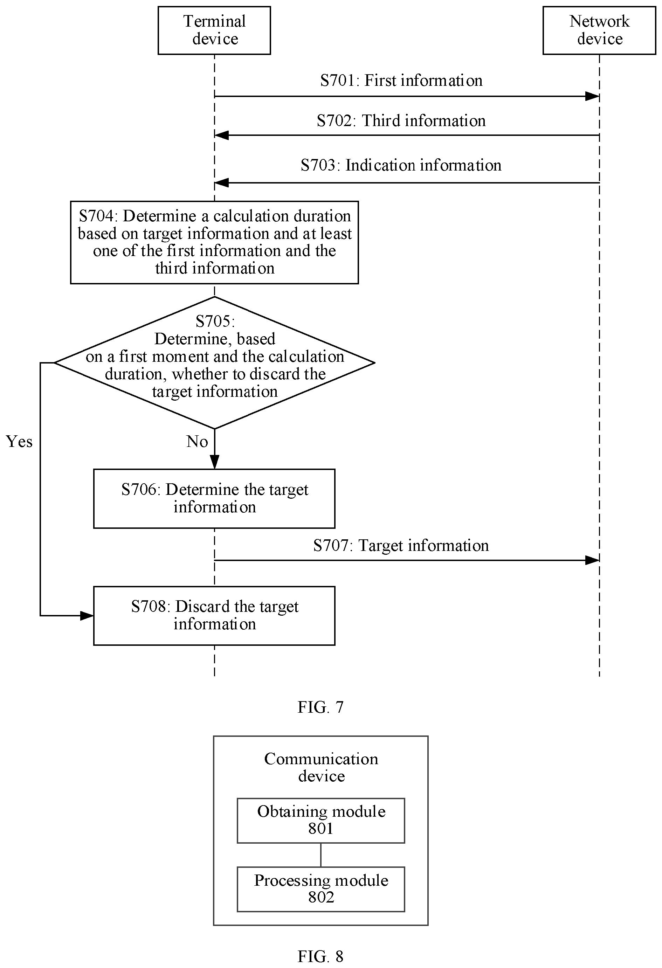

In FIG. 6, the third information is sent by the terminal device to the network device. In addition, the third information may be sent to the terminal device by the network device or another device other than the network device. The following uses an example in which the third information is sent by the network device to the terminal device. FIG. 7 is a schematic interaction flowchart of another communication method according to an embodiment of this application. The method includes the following steps.

S701: A terminal device sends first information to a network device.

S702: The network device sends third information to the terminal device.

The third information may be sent by the network device to the terminal device, or may be sent to the terminal device by a device other than the terminal device and the network device. This is not limited in this embodiment of this application.

S703: The network device sends indication information to the terminal device.

The indication information indicates to send target information to the network device at a first moment.

S704: The terminal device determines a calculation duration based on the target information and at least one of the first information and the third information.

For details, refer to S502. Details are not described herein again.

S705: The terminal device determines, based on the first moment and the calculation duration, whether to discard the target information; and if the target information is not to be discarded, performs S706, or if the target information is to be discarded, performs S708.

S706: The terminal device determines the target information.

S707: The terminal device sends the target information to the network device.

S708: Discard the target information.

The foregoing mainly describes the solutions provided in embodiments of this application from a perspective of interaction between network elements. Correspondingly, an embodiment of this application further provides a communication apparatus, and the communication apparatus is configured to implement the foregoing methods. The communication apparatus may be a component in the communication device in the foregoing method embodiments. It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module corresponding to each function may be obtained through division, or two or more functions may be integrated into one processing module. The integrated module may be implemented in a form of hardware, or may be implemented in a form of a software functional module. It should be understood that division into the modules in embodiments of this application is an example, and is merely logical function division. In actual implementation, there may be another division manner.

For example, if the communication apparatus is a communication device in the foregoing method embodiments, the communication device includes at least an obtaining module 801 and a processing module 802 shown in FIG. 8.

The obtaining module 801 is configured to obtain at least one of first information and second information.

The processing module 802 is configured to determine a calculation duration based on target information and at least one of the first information and the second information. The calculation duration is an estimated duration for determining the target information. The first information indicates a processing capability of the terminal device. The second information indicates model complexity of a first model. The first model is used to determine the target information.

In this embodiment of this application, the communication device is presented in a form of obtaining each functional module through division in an integrated manner. The module herein may be an ASIC, a circuit, a processor that executes one or more software or firmware programs, a memory, an integrated logic circuit, and/or another component capable of providing the foregoing functions. In a simple embodiment, a person skilled in the art may figure out that the subnode may be in a form of the communication apparatus 400 shown in FIG. 4.

For example, the processor 401 in the communication apparatus 400 shown in FIG. 4 may invoke computer-executable instructions stored in the memory 404, to cause the communication apparatus 400 to perform the communication method provided in the foregoing method embodiments.

Specifically, a function/an implementation process of the processing module may be implemented by the processor 401 in the communication apparatus 400 shown in FIG. 4 by invoking the computer-executable instructions stored in the memory 404.

Because the communication device provided in this embodiment of this application may perform the foregoing communication method, refer to the foregoing method embodiments for technical effects that can be obtained by the communication device. Details are not described herein again.

It should be understood that one or more of the foregoing modules or units may be implemented by using software, hardware, or a combination thereof. When any one of the foregoing modules or units is implemented by using software, the software exists in a form of computer program instructions, and is stored in the memory. The processor may be configured to execute the program instructions and implement the foregoing method procedure. The processor may be built into a SoC (system-on-a-chip) or an ASIC, or may be an independent semiconductor chip. In addition to a core for executing software instructions to perform operations or processing, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, an SoC, an FPGA, a PLD, a dedicated digital circuit, a hardware accelerator, or a non-integrated discrete device, and the hardware may run necessary software or does not depend on software to perform the foregoing method procedures.

Optionally, an embodiment of this application further provides a communication apparatus (for example, the communication apparatus may be a chip or a chip system). The communication apparatus includes a processor, configured to implement the method in any one of the foregoing method embodiments. In a possible design, the communication apparatus further includes a memory. The memory is configured to store necessary program instructions and necessary data. The processor may invoke program code stored in the memory, to indicate the communication apparatus to perform the method in any one of the foregoing method embodiments. Certainly, the communication apparatus may not include a memory. When the communication apparatus is a chip system, the communication apparatus may include a chip, or may include a chip and another discrete component. This is not specifically limited in this embodiment of this application.

In a possible implementation, an embodiment of this application further provides a computer-readable storage medium. The computer-readable storage medium stores a computer program or instructions. When the computer program or the instructions are run on a communication apparatus, the communication apparatus is caused to perform the method in any one of the foregoing method embodiments or the foregoing implementations.

In a possible implementation, an embodiment of this application further provides a distributed training system. The distributed training system includes the access network device in the foregoing method embodiments, the core network device in the foregoing method embodiments, and the terminal device in the foregoing method embodiments.

In a possible implementation, an embodiment of this application further provides a communication method. The communication method includes the method in any one of the foregoing method embodiments or any implementation of the foregoing method embodiments.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses.

The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

Although this application is described with reference to embodiments, in a process of implementing this application that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and the accompanying drawings are merely example descriptions of this application defined by the accompanying claims, and are considered as any of or all modifications, variations, combinations or equivalents that cover the scope of this application. It is clear that a person skilled in the art can make various modifications and variations to this application without departing from the spirit and scope of this application. In this way, this application is intended to cover these modifications and variations of this application provided that they fall within the scope of the claims of this application and equivalent technologies thereof.

## Claims

1. A communication method, applied to a communication device, wherein the method comprises:
obtaining at least one of first information and second information; and
determining a calculation duration based on target information and at least one of the first information and the second information, wherein the calculation duration is an estimated duration for determining the target information, the first information indicates a processing capability of a terminal device, the second information indicates model complexity of a first model, and the first model is used to determine the target information.

2. The method according to claim 1, wherein the calculation duration is determined based on at least a first duration and a second duration, the first duration is determined based on a type of the target information, and the second duration is determined based on the first information and/or the second information.

3. The method according to claim 2, wherein the first duration is an estimated duration for determining original information, or the first duration is an estimated duration for determining feature information, and both the original information and the feature information are used to determine the target information.

4. The method according to claim 1, wherein when the target information is determined based on a plurality of pieces of original information, the calculation duration is determined based on at least a first duration and a third duration, the first duration is determined based on a type of the target information, and the third duration is determined based on a quantity of the plurality of pieces of original information, and at least one of the first information and the second information.

5. The method according to claim 1, wherein when the target information is performance information of a second model, the calculation duration is determined based on at least a first duration and a fourth duration, the first duration is determined based on a type of the target information, and the fourth duration is determined based on the first information and a method for determining the performance information of the second model.

6. The method according to claim 2, wherein when there are a plurality of pieces of the target information, the calculation duration is determined based on at least the first duration, the second duration, and a quantity of pieces of the target information.

7. The method according to any one of claims 1 to 6, wherein the calculation duration further comprises a duration for generating uplink control information UCI based on the target information.

8. The method according to any one of claims 1 to 7, wherein the communication device is a terminal device or a network device.

9. The method according to claim 8, wherein the communication device is a terminal device; and
the method further comprises:
receiving indication information from a network device, wherein the indication information indicates to send the target information to the network device at a first moment.

10. The method according to claim 9, wherein the method further comprises:
determining, based on the first moment and the calculation duration, whether to send the target information to the network device.

11. The method according to claim 10, wherein the determining, based on the first moment and the calculation duration, whether to send the target information to the network device comprises:
when a time difference between a second moment and the first moment is less than the calculation duration, discarding the target information, wherein the second moment is determined based on an indication from the network device.

12. The method according to claim 11, wherein the second moment is determined based on a reference signal indicated by the network device; and
the method further comprises:
determining a moment at which the reference signal is received as the second moment.

13. The method according to claim 8, wherein the communication device is a terminal device; and
the method further comprises:
sending the first information to a network device.

14. The method according to claim 8, wherein the communication device is a terminal device; and
the method further comprises:
sending third information to a network device, wherein the third information indicates model complexity of one or more models.

15. The method according to claim 8, wherein the communication device is a terminal device; and
the method further comprises:
receiving third information from a first device, wherein the third information indicates model complexity of a plurality of models.

16. The method according to claim 8, wherein the communication device is a network device; and
the method further comprises:
sending indication information to a terminal device, wherein the indication information indicates the terminal device to send the target information to the network device at a first moment.

17. The method according to claim 16, wherein the method further comprises:
determining the first moment based on the calculation duration.

18. A communication apparatus, wherein the apparatus is deployed in a communication device, and the apparatus comprises:
a processing module, configured to determine a calculation duration based on target information and at least one of first information and second information, wherein the calculation duration is an estimated duration for determining the target information, the first information indicates a processing capability of the terminal device, the second information indicates model complexity of a first model, and the first model is used to determine the target information.

19. A communication device, wherein the communication device comprises at least one processor, and the at least one processor is coupled to at least one memory; and
the at least one processor is configured to execute a computer program or instructions stored in the at least one memory, to cause the access network device to perform the communication method according to any one of claims 1 to 17.

20. A computer-readable storage medium, comprising program code, wherein when the program code is run on a computer or a processor, the computer or the processor is caused to perform the communication method according to any one of claims 1 to 17.
